# EUROPEAN PATENT SPECIFICATION

(11) **EP 2 654 328 B1**
(45) Date of publication and mention of the grant of the patent: **30.04.2014**
(21) Application number: 12164619.4
(22) Date of filing: 18.04.2012
(51) Int. Cl.: H04W 4/20, H04W 4/22, H04W 4/02

(54) **Remote Request during On-Going Call**
Fernabfrage während eines eingehenden Anrufs
Demande à distance pendant une communication en cours

(43) Date of publication of application: 23.10.2013
(73) Proprietor: Doro AB, 226 43 Lund (SE)
(72) Inventor: Cullin, Peter, 245 44 Staffanstorp (SE); Palmqvist, Fredrik, 217 46 Malmö (SE)
(74) Representative: Ström & Gulliksson AB

(56) References cited:
- US-A1- 2003 050 039
- US-A1- 2010 029 302
- US-A1- 2012 005 285

## Description

### TECHNICAL FIELD

This application relates to a mobile communications terminal, a method and a computer-readable program carrying instructions for remotely requesting a position of a communication party, and in particular to a mobile communications terminal, a method and a computer-readable program carrying instructions for remotely requesting a position of a communication party during an on-going call.

### BACKGROUND

For a person being generally confused or suffering from a mental disability it is sometimes difficult for the person to recognize this himself. Such a person might even be lost without knowing it himself. Furthermore, it can be difficult for persons talking to a confused person to ascertain exactly how confused the person really is. It can be especially difficult to obtain a correct position for a confused person.

Also, it can be difficult for a person being under stress, such as when in danger or at risk, to adequately determine and provide his current position.

One manner of determining the position of a person is disclosed in the US patent application US2003050039 that serves to provide a cellular phone to be used for emergency reports that performs GPS positioning by means of remote control from an emergency report center, and transmits positional information to the emergency report center. The emergency report cellular phone according to the US2003050039 is constituted such that when an emergency report switch thereof is depressed, a call request is made to the emergency report center. The emergency report center transmits a response signal with the result that a call link is formed between the emergency report cellular phone and the emergency report center. Following completion of the telephone call, the emergency report center transmits a position recalculation command message, by means of a DTMF signal. The emergency report cellular phone, which has received this command message, performs GPS positioning and then converts latitudinal and longitudinal information to a DTMF signal before transmitting the same to the emergency report center. As a result, even in a case where, in a time of emergency, a reporting party is unable to perform GPS positioning manually as a result of a poor physical condition, for example, since GPS positioning is possible by means of remote control, it is possible to rescue the reporting party in a rapid and reliable manner.

The position determination taught by the patent application US2003050039 is not executed until after an alarm has been issued and requires that an emergency service has already been in contact with the person whose position is to be determined. It thus teaches that the emergency service initiates a call to the person to establish his mental and physical affinity before determining the position. The procedure is thus clearly to be used in real emergencies as is also indicated by the use of the alarm button. Furthermore, the cost of initiating such an emergency procedure in cases where it is not really needed is high and can affect a person's financial standing quite severely.

The published US patent application US 2010/029302 discloses a system wherein during an ongoing wireless telephone call communication session between a pair of mobile devices, a local device responds to its user's activation of a virtual or actual button or key, or its user's verbal command, by automatically sending an over the air message (e.g., a SMS or text message or other network communication message) to the remote device. The message requests location information of the remote device. Upon obtaining location information from the remote device, a location of the remote device is automatically displayed on the local device. Other embodiments are also described and claimed.

The published US patent application US 2012/005285 discloses a method for requesting location-based assistance executed on a mobile device of an assistance requester, and a method and system for providing location-based assistance executed on a server of a joint assistance service provider. The disclosed method integrates mobile positioning and telecommunications technologies to provide assistance provision information. In the disclosed method, an assistance request module of the mobile device is activated for execution to locate the assistance requester; assistance request information containing the assistance requester's location information is transmitted to the server of the joint assistance service provider. Then, the mobile device is connected to a social networking website or an assistance provider via the server of the joint assistance service provider to receive real-time assistance provision information. The disclosed method improves conventional assistance request methods as well as assistance provision timings. Also, the assistance request information, containing the assistance requester's location information, is analyzed to provide more accurate assistance-related data to the assistance provider. Therefore, the disclosed method allows the efficiency of providing assistance to be improved. However, the disclosed method requires the called party to take action to initiate the alarm.

There is thus a need for an improved manner of determining a person's mental affinity and/or their position without having to initiate costly emergency procedures.

### SUMMARY

It is an object of the teachings of this application to overcome the problems listed above by providing a mobile communications terminal comprising a memory, a user interface and a controller, wherein said controller is configured, during an on-going communication session with a second mobile communications terminal, to receive a request for a position through said user interface, generate a position request and transmit said position request to said second mobile communications terminal, thereby instructing said second mobile communications terminal to provide a current position of said second mobile communications terminal, receive a position response from said second mobile communications terminal, said position response indicating a position, present said position through said user interface, and receive a request for an alarm through said user interface and generate an alarm request and transmit said alarm request to said second mobile communications terminal, thereby instructing said second mobile communications terminal to issue an alarm to an emergency contact, thereby allowing for issuing appropriate alarms.

This allows a calling party to determine the position of a called party when the calling party suspects that the called party may be confused or otherwise in danger or at risk.

In that the controller is further configured to receive a request for an alarm through said user interface and generate an alarm request and transmit said alarm request to said second mobile communications terminal, thereby instructing said second mobile communications terminal to issue an alarm to an emergency contact, the calling party is enabled to establish the mental affinity and whether the mental affinity is indicative of a potential risk situation based on the current position of a called party before initiating an alarm, thereby avoiding that unnecessary alarms are initiated and making sure that alarms are only issued when appropriate and, in one embodiment as will be shown below, to the appropriate emergency contact.

It is a further object of the teachings of this application to overcome the problems listed above by providing a method for use in a mobile communications terminal, said method comprising during an on-going communication session with a second mobile communications terminal: receiving a request for a position through said user interface, generating a position request and transmitting said position request to said second mobile communications terminal, thereby instructing said second mobile communications terminal to provide a current position of said second mobile communications terminal, receiving a position response from said second mobile communications terminal, said position response indicating a position, presenting said position through said user interface, and receiving a request for an alarm through said user interface and generate an alarm request and transmitting said alarm request to said second mobile communications terminal, thereby instructing said second mobile communications terminal to issue an alarm to an emergency contact, thereby allowing for issuing appropriate alarms.

The method above has the same advantages as the mobile communications terminal.

It is a further object of the teachings of this application to overcome the problems listed above by providing a mobile communications terminal comprising a memory and a controller, wherein said controller is configured, during an on-going communication session with a first mobile communications terminal, to: receive a position request from said first mobile communications terminal, determine a position of said mobile communications terminal, generate a position response indicating said position and transmit said position response to said first mobile communications terminal, and receive an alarm request from said first mobile communications terminal and in response thereto issue an alarm to an emergency contact.

This allows for a calling party using a first mobile communications terminal as above to establish the position of a called party using a second mobile communications terminal as above to determine whether the called party is at risk.

In that the controller is further configured to receive an alarm request from said first mobile communications terminal and in response thereto issue an alarm to an emergency contact, the calling party is enabled for using a first mobile communications terminal to ensure that an appropriate alarm is issued.

It is a further object of the teachings of this application to overcome the problems listed above by providing a method for use in a mobile communications terminal, method comprising during an on-going communication session with a first mobile communications terminal: receiving a position request from said first mobile communications terminal, determining a position of said mobile communications terminal, and generating a position response indicating said position and transmitting said position response to said first mobile communications terminal, and receiving an alarm request from said first mobile communications terminal and in response thereto issue an alarm to an emergency contact.

The method above has the same advantages as the mobile communications terminal.

It is a further object of the teachings of this application to overcome the problems listed above by providing a computer readable medium comprising instructions that when loaded into and executed by a controller causes the execution of a method as described above.

The inventors of the present application have realized, after inventive and insightful reasoning, that by allowing a calling party to seamlessly request the position of a called party, the calling party is able to ascertain whether the called party is at any risk or danger based on both the mental affinity and the position of the called party, thereby ensuring that only appropriate alarms are issued and in circumstances where an alarm is warranted.

Other features and advantages of the disclosed embodiments will appear from the attached detailed disclosure.

### BRIEF DESCRIPTION OF DRAWINGS

The invention will be described in further detail under reference to the accompanying drawings in which:
Figure 1 shows a schematic view of a mobile communications terminal according to one embodiment of the teachings of this application;
Figure 2 shows a schematic view of the general structure of a mobile communications terminal according to one embodiment of the teachings of this application;
Figure 3 shows a schematic view of a telecommunications network comprising a mobile communications terminal according to one embodiment of the teachings of this application;
Figure 4 shows a schematic view of a computer-readable medium according to one embodiment of the teachings of this application;
Figure 5 shows a time-dependency graph according to an embodiment of the teachings of this application;
Figure 6 shows a flow chart for a method for a first mobile communications terminal according to an embodiment of the teachings of this application; and
Figure 7 shows a flow chart for a method for a second mobile communications terminal according to an embodiment of the teachings of this application.

### DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein;
rather, these embodiments are provided by way of example so that this disclosure will be thorough and complete, and will fully convey the scope of the invention to those skilled in the art. Like numbers refer to like elements throughout.

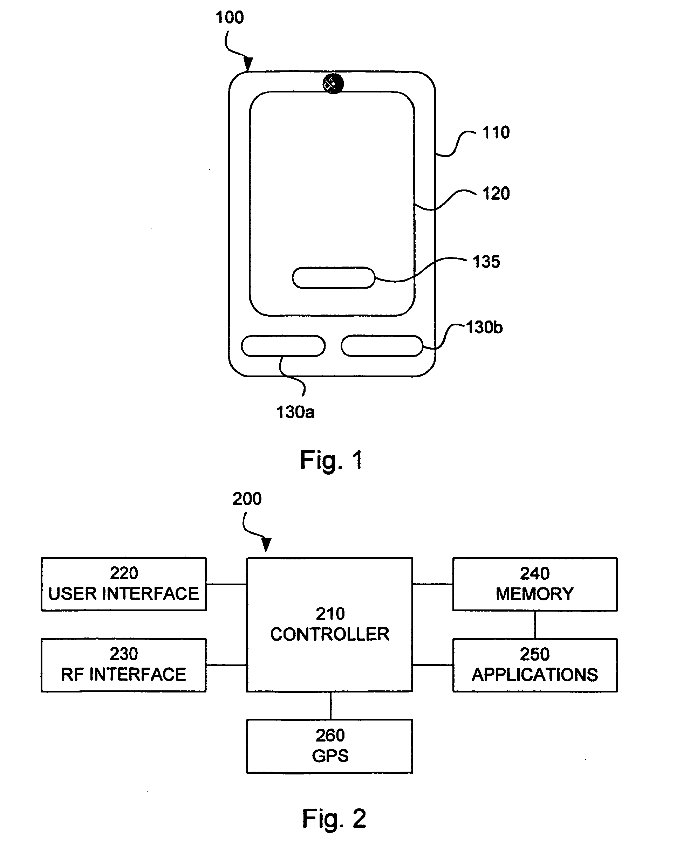

Figure 1 shows a schematic overview of a mobile communications terminal 100 adapted according to the teachings herein. In the embodiment shown the mobile communications terminal is a mobile phone 100. In other embodiments the mobile communications terminal 100 is a personal digital assistant, a media player, a location finding device or any hand-held device capable of communicating with other devices.

The mobile phone 100 comprises a housing 110 in which a display 120 is arranged. In one embodiment the display 120 is a touch display. In other embodiments the display 120 is a non-touch display. Furthermore, the mobile phone 100 comprises two keys 130a, 130b. In this embodiment there are two keys 130, but any number of keys, including none, is possible and depends on the design of the mobile phone 100. In one embodiment the mobile phone 100 is configured to display and operate a virtual key 135 on the touch display 120. It should be noted that the number of virtual keys 135 are dependent on the design of the mobile phone 100 and an application that is executed on the mobile phone 100. In one embodiment the communications terminal 100 comprises an ITU-T keypad or a QWERTY (or equivalent) keypad in addition to or as an alternative to a touch-sensitive display. In an embodiment where the keypad is an alternative to a touch-sensitive display, the display 120 is a non-touch-sensitive display.

Figure 2 shows a schematic view of the general structure of a communications terminal according to figure 1. The mobile phone 100 comprises a controller 210 which is responsible for the overall operation of the mobile terminal and is preferably implemented by any commercially available CPU ("Central Processing Unit"), DSP ("digital signal processor") or any other electronic programmable logic device or a combination of such processors or other electronic programmable logic device. The controller 210 may be implemented using instructions that enable hardware functionality, for example, by using executable computer program instructions in a general-purpose or special-purpose processor that may be stored on a computer readable storage medium (disk, memory etc) 240 to be executed by such a processor. The controller 210 is configured to read instructions from the memory 240 and execute these instructions to control the operation of the mobile communications terminal 100. The memory 240 may be implemented using any commonly known technology for computer-readable memories such as ROM, RAM, SRAM, DRAM, CMOS, FLASH, DDR, EEPROM memory, flash memory, hard drive, optical storage or any combination thereof. The memory 240 is used for various purposes by the controller 210, one of them being for storing application data and various software modules in the mobile terminal. The software modules include a real-time operating system, drivers for a man-machine interface 220, an application handler as well as various applications 250. The applications 250 are sets of instructions that when executed by the controller 210 control the operation of the mobile communications terminal 100. The applications 250 can include a messaging application for short messaging service (SMS), multimedia messaging service (MMS) and electronic mail, a media player application, as well as various other applications 250, such as applications for voice calling, video calling, web browsing, document reading and/or document editing, an instant messaging application, a phonebook application, a calendar application, a control panel application, one or more video games, a notepad application, location finding applications, etc. In one embodiment the mobile communications terminal 200 further comprises a Global Positioning Systems (GPS) receiver 260. The mobile communications terminal 200 is thus able to determine its present location through the GPS receiver 260. Alternative manners of finding a location are through identifying the current cell that the mobile communications terminal 200 is connected to, or identifying a Bluetooth beacon or a wireless network server within the range of the mobile communications terminal 200..

The mobile communications terminal 200 further comprises a user interface 220, which in the mobile communications terminal 100 of figure 1 is comprised of the display 120, the keys 130, 135, a microphone and a loudspeaker. The user interface (UI) 220 also includes one or more hardware controllers, which together with the user interface drivers cooperate with the display 120, keypad 130, as well as various other I/O devices such as microphone, loudspeaker, vibrator, ringtone generator, LED indicator, etc. As is commonly known, the user may operate the mobile terminal through the man-machine interface thus formed.

The mobile communications terminal 200 further comprises a radio frequency interface 230, which is adapted to allow the mobile communications terminal to communicate with other communications terminals in a radio frequency band through the use of different radio frequency technologies. Examples of such technologies are W-CDMA, GSM, UMTS, LTE and NMT to name a few. The controller 210 is configured to operably execute the applications 250, such as the voice call and message handling applications, through the RF interface 230 and software stored in the memory 240, which software includes various modules, protocol stacks, drivers, etc. to provide communication services (such as transport, network and connectivity) for the RF interface 230, and optionally a Bluetooth interface and/or an IrDA interface for local connectivity. The RF interface 230 comprises an internal or external antenna as well as appropriate radio circuitry for establishing and maintaining a wireless link to a base station. As is well known to a person skilled in the art, the radio circuitry comprises a series of analogue and digital electronic components, together forming a radio receiver and transmitter. These components include, e.g., band pass filters, amplifiers, mixers, local oscillators, low pass filters, AD/DA converters, etc.

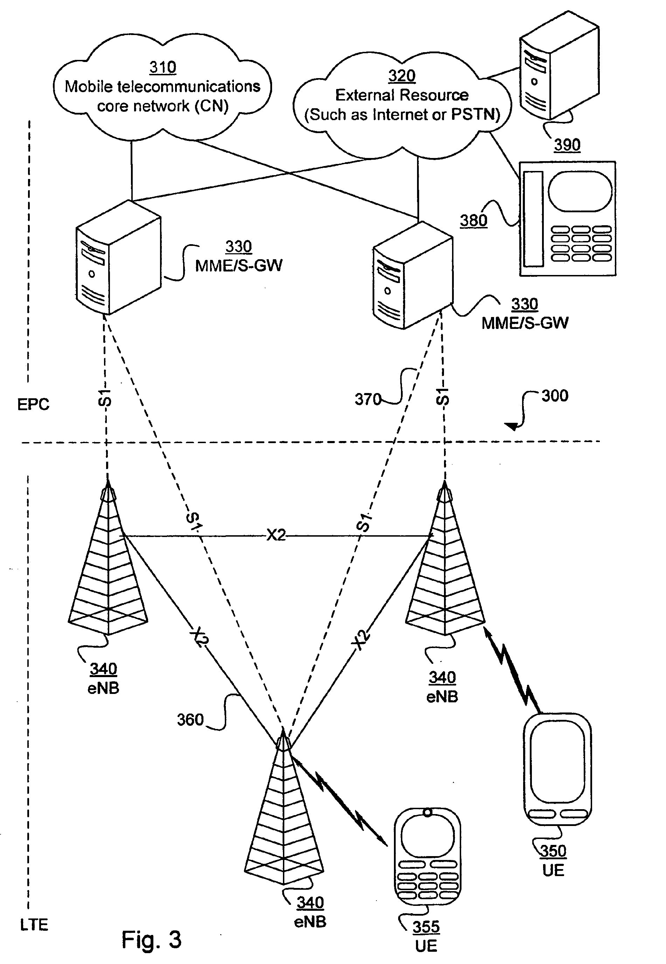

Figure 3 shows a schematic view of the general structure of a telecommunications system 300 according to the teachings herein. In the telecommunication system of figure 3, various telecommunications services such as cellular voice calls, www/wap browsing, cellular video calls, data calls, facsimile transmissions, music transmissions, still image transmissions, video transmissions, electronic message transmissions and electronic commerce may be performed between a mobile terminal 100, 200, 300 according to the disclosed embodiments and other communications terminals, such as another mobile terminal 355 or a stationary telephone 380. The mobile terminals 350, 355 are connected to a mobile telecommunications network 310 through Radio Frequency links via base stations 340.

The telecommunications system 300 comprises at least one server 330. A server 330 has a data storage and a controller that may be implemented by any commercially available CPU ("Central Processing Unit"), DSP ("Digital Signal Processor") or any other electronic programmable logic device. In one embodiment such a server is a Mobility Management Entity (MME). In one embodiment such a server is a Gateway (GW). The servers 330 are configured to communicate with a mobile telecommunications core network (CN) 310 and/or an external resource 320 such as the internet or a Public Switched Telephone Network (PSTN). A PSTN 320 is configured to communicate with and establish communication between stationary or portable telephones 380. In one embodiment the external resource comprises or is configured to communicate with an external service provider 390. In one embodiment the servers 330 are configured to communicate with other communications terminals using a packet switched technology or protocol. In such an embodiment the servers 330 may make up an Evolved Packet Core (EPC) layer.

The servers 330 are configured to communicate with nodes, also referred to as base stations 340. In one embodiment the base station 340 is an evolved Node Base (eNB). A base station 340 is further configured to communicate with a server 330. In one embodiment the communication between a server 330 and a base station 340 is effected through a standard or protocol 370. In one embodiment the protocol is S1. A base station 340 is configured to communicate with another base station 340. In one embodiment the communication between a base station 340 and another base station 340 is effected through a standard or protocol 360. In one embodiment the protocol 360 is X2. A base station 340 is further configured to handle or service a cell 380. In one embodiment the one or more base stations 340 make up a Long Term Evolution (LTE) layer. In one embodiment the one or more base stations 340 make up an LTE Advanced layer.

In one embodiment the base station 340 is configured to communicate with a mobile communications terminal 350 (100, 200) through a wireless radio frequency protocol.

In one embodiment the telecommunications system 300 is an Evolved Packet System (EPS) network. In one embodiment the telecommunications system is a system based on the 3GPP (3rd Generation Partnership Project) standard. In one embodiment the telecommunications system is a system based on the UMTS (Universal Mobile Telecommunications System) standard. In one embodiment the telecommunications system is a system based on a telecommunications standard such as GSM, D-AMPS, CDMA2000, FOMA or TD-SCDMA.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other devices. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

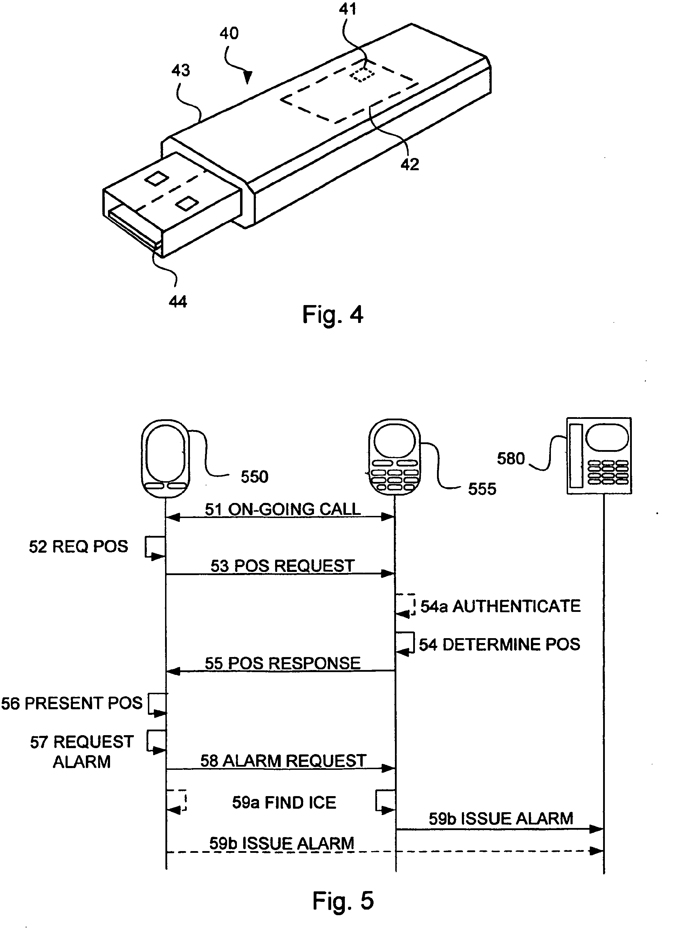

Figure 4 shows a schematic view of a computer-readable medium as described in the above. The computer-readable medium 40 is in this embodiment a memory stick, such as a Universal Serial Bus (USB) stick. The USB stick 40 comprises a housing 43 having an interface, such as a connector 44, and a memory chip 42. The memory chip 42 is a flash memory, that is, a non-volatile data storage that can be electrically erased and re-programmed. The memory chip 42 is programmed with instructions 41 that when loaded (possibly via the connector 44) into a controller, such as a processor, execute a method or procedure according to the embodiments disclosed above. The USB stick 40 is arranged to be connected to and read by a reading device, such as a terminal according to figure 1, for loading the instructions into the controller. It should be noted that a computer-readable medium can also be other mediums such as compact discs, digital video discs, hard drives or other memory technologies commonly used. The instructions can also be downloaded from the computer-readable medium via a wireless interface to be loaded into the controller.

Figure 5 shows a time-dependency graph according to an embodiment of the teachings herein. A first mobile communications terminal 550 is connected to a second mobile communications terminal 555 through an ongoing communication session 51.Each of the first and second mobile communications terminals 550, 555 may, for instance, be implemented like the mobile communications terminal 100 or 200 of figure 1 or 2 In this exemplary embodiment the first mobile communications terminal 550 represents a calling party, the second mobile communications terminal 555 represents a called party and the communication session 51 will be a voice call. It should be noted that for the sake of the teachings herein it does not matter which party initiated the communication session.

If the calling party perceives that there is something out of the ordinary with the called party, for example the called party seems confused or otherwise lost or unresponsive, the calling party issues a command on his mobile communications terminal 550 to request a position 52 of the called party. In one embodiment the calling party issues the command through activating a designated virtual key (referenced 135 in figure 1). In one embodiment the calling party issues the command by inputting a request code.

The command is received by a controller (210) of the first mobile communications terminal 550 and the controller issues a position request 53 that is sent to the second mobile communications terminal 555. In one embodiment the position request is sent as a coded DTMF (Dual Tone Multiple-Frequency) signal. In such an embodiment and where the calling party issues the request through activating a virtual key, the controller is configured to create a corresponding coded DTMF signal and transmit it. In an alternative embodiment where the calling party issues the request by inputting a request code, the controller is configured to create a coded DTMF signal corresponding to the request code and transmit it. In an example embodiment the request code is implemented as being executed upon entering a sequence such as: * 11 * 1234#[SEND]. In this example 11 indicates that it is a position that is requested, 1234 is the authentication code and [SEND] is a notation representing that a send key is activated to send the request code. To enable a calling party to more easily input the code and also to remember it, the code can be stored in a speed dial memory of the first mobile communications terminal 550.

By utilizing the input of a code no specialized hardware is required which allows for cheaper production costs of a mobile communications terminal and also enables the manner disclosed herein to be employed in any mobile communications terminal capable of determining a position.

To ensure that the integrity of the called party is reserved the controller (210) of the second mobile communications terminal 555 is configured to authenticate 54a the position request before executing it. In one embodiment the calling party is authenticated by including an access code in the request. This allows the calling party to use any available terminal for communicating with the called party. In one embodiment the calling party's request is authenticated by comparing an identifier for the calling party (such as the IMSI or phone number) against a list of pre-authenticated contacts. The list may be stored in a memory (referenced 240) of the second mobile communications terminal 555. This prevents that other users misuse the code if the code is intercepted by unauthorized users. In one embodiment the calling party is authenticated by the second mobile communications terminal 555 by prompting the called party for confirmation that a position may be determined and provided to the calling party. In figure 5 the action of authenticating 54a the request is shown as being optional as indicated by the dashed lines.

The second mobile communications terminal 555 is configured to determine its current position 54 in response to receiving a position request. In one embodiment the controller (210) of the second mobile communications terminal 555 is configured to request the current position from a GPS receiver (referenced 260 in figure 2). The GPS receiver 260, which can be external or internal to the second mobile communications terminal 555, returns the current position to the controller 210.

GPS receivers 260 sometimes require a lot of power to operate and for this reason it is common for users to have the GPS receiver turned off during normal use of their mobile communications terminal. Or, the user may not even be aware that the mobile communications terminal is capable of position determination using GPS and thus has not activated it. In one embodiment the controller (210) of the second mobile communications terminal 555 is configured to, upon receiving a position request, determine whether the GPS receiver is activated, and if not, activate it. In one embodiment the controller 210 is further configured to deactivate the GPS receiver after the position has been determined, or upon completion of the ongoing communication session (to allow for updated position requests without turning the GPS receiver on and off, as it takes some time for a GPS receiver to synchronize with the satellites). This allows for a position to be accurately determined while still saving power.

The controller (210) is configured to transmit the code in a position response 55 to the first mobile communications terminal 550. In one embodiment the position is sent as coordinates which allows a receiving party to accurately determine the position. In one embodiment the controller of the second mobile communications terminal 555 is configured to transform the position into a form that is more easily recognizable, such as a reference to a street address, as a proximity to a known building, park or square or as a reference to user-specified hot points, for example HOME.

The manner of sending the position response can vary according to user-settings and capabilities of both the called party's mobile communications terminal 555 and the calling party's mobile communications terminal 550. As for safeguarding the called party's integrity, the signal may be coded so that only authenticated positions are presented to the calling party.

In one embodiment the position response is transmitted as a DTMF signal to the calling party's mobile communications terminal 550, wherein the signal carries a code indicating the position of the calling party. One example of such a code is: *1234*48.8583*2.2945#, wherein 1234 is an authentication code and 48.8583 is the latitudinal coordinate and 2.2945 is the longitudinal coordinate.

In one embodiment the position response is transmitted as a text message, such as an SMS message, to the calling party's mobile communications terminal 550, wherein the text message carries a position of the calling party. One example of such a position text message is the coordinates for the current position: Position 48.8583N 2.2945E. Another example of such a text message is the position given as a reference to a known address or other easily recognizable entity as has been disclosed above, for example: Position Eiffel Tower.

In one embodiment the position response is transmitted as a media message, such as a MMS message, to the calling party's mobile communications terminal 550. In one example the media message carries an image showing the position of the calling party on a map. In another example the media message carries an audio recording indicating the position of the calling party.

It should be noted that other means of finding a current position of the second mobile communications terminal 555 may be employed. Examples of such means are: identification of network cell (Cell ID), triangulation for base stations having known positions, proximity estimations based on presence of known Bluetooth™ beacons or wireless servers or hubs, such as a WiFi hub operating under the IEEE 802.11 standard.

In one embodiment where it is not possible to determine a position, the controller of the second mobile communications terminal 555 is configured to provide a null position to the first mobile communications terminal 550.

The calling party's mobile communications terminal 550 receives the position response and presents 56 it to the calling party. In one embodiment the controller is configured to present the position through a voice over that is played through the ear piece (or loud speaker) of the mobile communications terminal. This enables a calling party to be informed of the position without shifting focus by having to remove the mobile communications terminal 550 from his ear to watch the display. In one embodiment the controller is configured to present the position on the display. This allows for a calling party to focus on the on-going conversation without it being interrupted and decide when to look at the position. In one such embodiment the controller is configured to display the position in text. In one alternative such embodiment the controller is configured to display the position as a graphical indication, such as displaying a map indicating the position of the called party.

In one embodiment the controller is configured to present the position in the format it is received. In an alternative embodiment the controller is configured to transform the format of the position as received and present the transformed position. This enables a mobile communications terminal 550 to receive a position in a format not suited for presentation according to user wishes or that is difficult to recognize, transform the format and present the position in a suitable or more easily recognizable format. For example, the controller can receive the position as coordinates in a DTMF-signal, transform the coordinates into a reference or a hot spot by identifying the coordinates and present the name of the hotspot or the reference through a voice over and/or a text message displayed on the display. Alternatively, or additionally, the controller of the first mobile communications terminal 550 is configured to display a map indicating the coordinates, possibly indicating the name of a reference or hotspot if such has been identified.

The calling party, now being aware of the position of the called party, can determine whether the called party is in any danger and if an alarm should be issued or not. For example, should a calling party determine that a called party is mildly confused, but is presently in a nursing home, there is no need to raise an alarm as it can be safely assumed that the called party will be attended to and cared for. However, should the called party be at the position indicated in the examples above or perhaps deep in a forest and be severely confused it would be prudent to raise an alarm. This allows a calling party to determine the proper circumstances when an alarm should be raised or not, thereby being able to issue an alarm if so is needed while avoiding issuing unnecessary alarms.

The calling party requests an alarm 57 on the first mobile communications terminal 550. The alarm can be issued through activation of a virtual key or by inputting a code such as has been described above with reference to how to request a determination of the position.

The controller (210) of the first mobile communications terminal 550 receives the request from the calling party and creates and transmits an alarm request 58 to the second mobile communications terminal 555, thereby instructing the second mobile communications terminal 555 to initiate an alarm sequence. The controller (210) of the second mobile communications terminal 555 receives the alarm request and issues an alarm 59b accordingly to an emergency contact; such emergency contact may be an operator of a safety or security service, an automated alarm service or it may be a person such as a friend or a relative.

In one embodiment the controller (210) of the second mobile communications terminal 555 is configured to include the determined position when issuing the alarm 59b.

As would be apparent the nature of the emergency would be different in different positions and states of awareness and it would be beneficial to be able to issue a correspondingly appropriate alarm. For example, should a called party be determined to be severely confused while being in a nursing home, the appropriate alarm would be to notify the nursing staff of the confused state of the called party, whereas should a confused person be determined to be deep in a forest, it would be more appropriate to issue an alarm to emergency services such as forest rangers. It would be apparent to a skilled reader that there is an abundance of different situations and corresponding appropriate emergency operators to contact. To allow for contacting different emergency contacts or operators the controller (210) of the second mobile communications terminal 555 is configured to find a contact 59a, an In Case of Emergency contact, according to the determined position and issue the alarm to that contact. The ICE may be a pre-defined contact, such as a relative or friend. It may also be an emergency operator such as a private security provider or the public security service. Alternatively, or additionally, the controller of the first mobile communications terminal 550 is configured to include an indication of an ICE in the alarm request. The ICE can be provided by the calling party, for example by providing a code identifying the ICE from a list of ICEs, providing the contact information of the ICE or by selecting the ICE from a displayed list of ICEs. In one embodiment an example alarm request to be provided to the controller of the first mobile communications terminal 550 is: *12*1234*112#, wherein 12 indicates that it is an alarm request that it is to be .issued, 1234 is an authentication code and 112 is the number of the ICE to be contacted.

In an embodiment where the alarm request is transmitted as a DTMF signal, the code can be sent as in the above example of how to input the request.

In one embodiment the controller of the first mobile communications terminal 550 and/or the controller of the second mobile communications terminal 555 are configured to query a remote server, such as an operator or emergency server, for an appropriate emergency contact based on the determined position.

In one embodiment where the issuance of the alarm 59b includes the determined position, an emergency operator proxy (580) can be arranged to determine which emergency contact that should be contacted based on the determined position. For example, should an alarm be issued by the calling party and the alarm is sent to an emergency server at a nursing home, the nursing home server can determine that a public security service should be contacted if the position is remote to the nursing home, whereas a specified care giver should be alarmed if the position is within the nursing home.

It should be noted that although the examples given herein are directed at nursing homes it should be noted that the teachings herein are applicable to other institutions such as day care centres, schools, hospitals, prisons and work places to name a few.

Alternatively (or additionally), the controller (210) of the first mobile communications terminal 550 receives the request from the calling party and creates and transmits an alarm request 58 (indicated by dashed lines) directly to an emergency contact 580. As has been described above the controller of the first mobile communications terminal 550 can also be configured to find an ICE to issue the alarm to. In one embodiment the controller (210) of the first mobile communications terminal 555 is configured to include the determined position when issuing the alarm 59b.

In one embodiment the request of an alarm 57 is implicit and the alarm request 57 is automatically generated if the controller determines that the received position is within an area or at a position that is indicated to be of danger. An example of such an area is an area outside a nursing home. One further example of such an embodiment is where the position has not been successfully retrieved or determined.

In one embodiment the controller of the first mobile communications terminal 550 is configured to prompt the calling party for confirmation that an alarm request 57 is to be generated, and after receiving such confirmation, generate the alarm request 58. This allows for a simple manner of activating an alarm while still preventing that unnecessary alarms are issued.

It should be noted that even though the description above is focused on an alarm being issued it is not required that an alarm is actually issued. The calling party may opt to not initiate an alarm.

In one embodiment the first mobile communications terminal 550 and the second mobile communications terminal 555 are adapted to only implement the position requesting features as disclosed above. This allows for a calling party to determine the position of a called party without being able to raise an alarm during the on-going call which further prevents that unnecessary alarms are issued.

In one embodiment the first mobile communications terminal 550 and the second mobile communications terminal 555 are adapted to only implement the alarm requesting features as disclosed above. This allows for a quick manner of issuing an alarm should the calling party be concerned about the well-being of the called party.

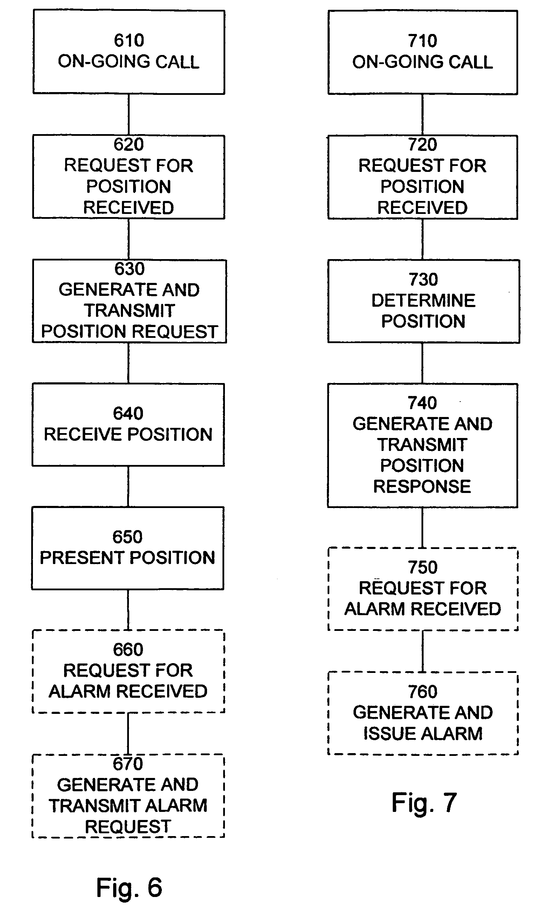

Figure 6 shows a flowchart for a method to be executed by a first mobile communications terminal as described above. During an ongoing call 610 with a called party on a second mobile communications terminal a controller receives 620 a request for a position and in response thereto generates and transmits a position request 630 to the called party. A response indicating a position is received 640 from the called party and presented 650 through the first mobile communications terminal. Optionally a request for an alarm is received 660 by the controller from the calling party, and the controller generates and transmits an alarm request 670 to the called party.

As would be apparent the different options, as has been disclosed with reference to figure 5, also apply to the method presented in figure 6.

Figure 7 shows a flowchart for a method to be executed by a second mobile communications terminal as described above. During an ongoing call 710 with a calling party on a first mobile communications terminal a controller receives 720 a position request from the first mobile communications terminal and in response thereto determines a current position 730, possibly through the use of a GPS receiver, and generates and transmits a position response 740 to the first mobile communications terminal.

Optionally an alarm request is received 750 by the controller of the second mobile communications terminal from the first mobile communications terminal, and the controller of the second mobile communications terminal generates and issues an alarm 760 to an emergency contact.

As would be apparent the different options as has been disclosed with reference to figure 5 also apply to the method presented in figure 7.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A mobile communications terminal (200, 550) comprising a memory (240), a user interface (120, 130, 135, 220) and a controller (210), wherein said controller (210) is configured, during an on-going communication session with a second mobile communications terminal (200, 555), to:
receive a request for a position through said user interface (120, 130, 135, 220);
generate a position request and transmit said position request to said second mobile communications terminal (200, 555), thereby instructing said second mobile communications terminal (200, 555) to provide a current position of said second mobile communications terminal (200, 555);
receive a position response from said second mobile communications terminal (200, 555), said position response indicating a position;
present said position through said user interface (120, 220), thereby allowing for issuing appropriate alarms; and
receive a request for an alarm through said user interface (120, 130, 135, 220) and
generate an alarm request and transmit said alarm request to said second mobile communications terminal (200, 555), thereby instructing said second mobile communications terminal (200, 555) to issue an alarm to an emergency contact (580).

2. The mobile communications terminal (200, 550) according to claim 1, wherein the controller (210) is further configured to include an authentication in said position request.

3. The mobile communications terminal (200, 550) according to any of claims 1 to 2, wherein the controller (210) is further configured to present said position as a voice over through said user interface (220).

4. The mobile communications terminal (200, 550) according to any of claims 1 to 3, wherein the controller (210) is further configured to present a prompt for an alarm through said user interface (120, 220) and wherein said received request for an alarm through said user interface (120, 130, 135, 220) is a response to said prompt thereby allowing for confirmation of an alarm prior to issuance of said alarm.

5. The mobile communications terminal (200, 550) according to any of claims 1 to 4, wherein said position indicates a pre-defined hot spot or a reference to a street address, a park, a square or a building.

6. The mobile communications terminal (200, 550) according to any of claims 1 to 5, wherein said request for a position, and/or request for an alarm when dependent on claims 2 to 5, is received through a touch display (120, 135).

7. The mobile communications terminal (200, 550) according to any of claims 1 to 6, wherein said request for a position, and/or request for an alarm when dependent on claims 2 to 5, is received as a code through at least one number key (130).

8. A method for use in mobile communications terminal (200, 550) comprising a memory (240), a user interface (120, 130, 135, 220) and a controller (210), said method comprising during an on-going communication session with a second mobile communications terminal (200, 555):
receiving a request for a position through said user interface (120, 130, 135, 220);
generating a position request and transmitting said position request to said second mobile communications terminal (200, 555), thereby instructing said second mobile communications terminal (200, 555) to provide a current position of said second mobile communications terminal (200, 555);
receiving a position response from said second mobile communications terminal (200, 555), said position response indicating a position;
presenting said position through said user interface (120, 220), thereby allowing for issuing appropriate alarms; and
receiving a request for an alarm through said user interface (120, 130, 135, 220) and
generating an alarm request and transmitting said alarm request to said second mobile communications terminal (200, 555) instructing said second mobile communications terminal (200, 555) to issue an alarm to an emergency contact (580).

9. A mobile communications terminal (200, 555) comprising a memory (240) and a controller (210), wherein said controller (210) is configured, during an on-going communication session with a first mobile communications terminal (200, 550), to:
receive a position request from said first mobile communications terminal (200, 550);
determine a position of said mobile communications terminal (200, 555);
generate a position response indicating said position and transmit said position response to said first mobile communications terminal (200, 550); and
receive an alarm request from said first mobile communications terminal (200, 550) and
in response thereto issue an alarm to an emergency contact (580).

10. A method for use in mobile communications terminal (200, 555) comprising a memory (240) and a controller (210), said method comprising during an on-going communication session with a first mobile communications terminal (200, 550):
receiving a position request from said first mobile communications terminal (200, 550);
determining a position of said mobile communications terminal (200, 555);
generating a position response indicating said position and transmitting said position response to said first mobile communications terminal (200, 550); and
receiving an alarm request from said first mobile communications terminal (200, 550) and
in response thereto issuing an alarm to an emergency contact (580).

11. A computer readable storage medium (40) encoded with instructions (41) that, when loaded and executed on a processor, cause the method according to claim 8 or claim 10 to be performed.

## Patentansprüche

1. Mobiles Kommunikationsendgerät (200, 550), umfassend einen Speicher (240), eine Benutzerschnittstelle (120, 130, 135, 220) und eine Steuerung (210), wobei die Steuerung (210) so konfiguriert ist, dass sie während einer bestehenden Kommunikationssitzung mit einem zweiten mobilen Kommunikationsendgerät (200, 555):
eine Abfrage für eine Position durch die Benutzerschnittstelle (120, 130, 135, 220) empfängt;
eine Positionsabfrage erzeugt und die Positionsabfrage an das zweite mobile Kommunikationsendgerät (200, 555) sendet, um dadurch das zweite mobile Kommunikationsendgerät (200, 555) anzuweisen, eine aktuelle Position des zweiten mobilen Kommunikationsendgeräts (200, 555) bereitzustellen;
eine Positionsantwort vom zweiten mobilen Kommunikationsendgerät (200, 555) empfängt, wobei die Positionsantwort eine Position angibt;
die Position durch die Benutzerschnittstelle (120, 220) darstellt, um dadurch ein Ausgeben von entsprechenden Alarmen zu ermöglichen; und
eine Abfrage für einen Alarm durch die Benutzerschnittstelle (120, 130, 135, 220, 220) empfängt und
eine Alarmabfrage erzeugt und die Alarmabfrage an das zweite mobile Kommunikationsendgerät (200, 555) sendet, um dadurch das zweite mobile Kommunikationsendgerät (200, 555) anzuweisen, einen Alarm an einen Notfallkontakt (580) auszugeben.

2. Mobiles Kommunikationsendgerät (200, 550) nach Anspruch 1, wobei die Steuerung (210) ferner so konfiguriert ist, dass sie eine Authentifizierung in die Positionsabfrage aufnimmt.

3. Mobiles Kommunikationsendgerät (200, 550) nach einem der Ansprüche 1 bis 2, wobei die Steuerung (210) ferner so konfiguriert ist, dass sie die Position als Voice-over durch die Benutzerschnittstelle (220) darstellt.

4. Mobiles Kommunikationsendgerät (200, 550) nach einem der Ansprüche 1 bis 3, wobei die Steuerung (210) ferner so konfiguriert ist, dass sie eine Aufforderung für einen Alarm durch die Benutzerschnittstelle (120, 220) darstellt, und wobei die empfangene Abfrage für einen Alarm durch die Benutzerschnittstelle (120, 130, 135, 220) eine Antwort auf die Aufforderung ist, um dadurch eine Bestätigung eines Alarms vor der Ausgabe des Alarms zu ermöglichen.

5. Mobiles Kommunikationsendgerät (200, 550) nach einem der Ansprüche 1 oder 4, wobei die Position einen vordefinierten Hotspot oder eine Referenz einer Straßenadresse, eines Parks, eines Platzes oder eines Gebäudes anzeigt.

6. Mobiles Kommunikationsendgerät (200, 550) nach einem der Ansprüche 1 oder 5, wobei die Abfrage für eine Position und/oder die Abfrage für einen Alarm, wenn von Anspruch 2 bis 5 abhängig, durch eine Berührungsanzeige (120, 135) empfangen wird.

7. Mobiles Kommunikationsendgerät (200, 550) nach einem der Ansprüche 1 oder 6, wobei die Abfrage für eine Position und/oder die Abfrage für einen Alarm, wenn von Anspruch 2 bis 5 abhängig, als Code durch mindestens eine Zahlentaste (130) empfangen wird.

8. Verfahren zur Verwendung in einem mobilen Kommunikationsendgerät (200, 550), das einen Speicher (240), eine Benutzerschnittstelle (120, 130, 135, 220) und eine Steuerung (210) umfasst, wobei das Verfahren während einer bestehenden Kommunikationssitzung mit einem zweiten mobilen Kommunikationsendgerät (200, 555) umfasst:
Empfangen einer Abfrage für eine Position durch die Benutzerschnittstelle (120, 130, 135, 220);
Erzeugen einer Positionsabfrage und Senden der Positionsabfrage an das zweite mobile Kommunikationsendgerät (200, 555), um dadurch das zweite mobile Kommunikationsendgerät (200, 555) anzuweisen, eine aktuelle Position des zweiten mobilen Kommunikationsendgeräts (200, 555) bereitzustellen;
Empfangen einer Positionsantwort vom zweiten mobilen Kommunikationsendgerät (200, 555), wobei die Positionsantwort eine Position angibt;
Darstellen der Position durch die Benutzerschnittstelle (120, 220), um dadurch ein Ausgeben von entsprechenden Alarmen zu ermöglichen; und
Empfangen einer Abfrage für einen Alarm durch die Benutzerschnittstelle (120, 130, 135, 220, 220) und
Erzeugen einer Alarmabfrage und Senden der Alarmabfrage an das zweite mobile Kommunikationsendgerät (200, 555), um das zweite mobile Kommunikationsendgerät (200, 555) anzuweisen,
einen Alarm an einen Notfallkontakt (580) auszugeben.

9. Mobiles Kommunikationsendgerät (200, 555), umfassend einen Speicher (240) und eine Steuerung (210), wobei die Steuerung (210) so konfiguriert ist, dass sie während einer bestehenden Kommunikationssitzung mit einem ersten mobilen Kommunikationsendgerät (200, 550) :
eine Positionsabfrage vom ersten mobilen Kommunikationsendgerät (200, 550) empfängt;
eine Position des mobilen Kommunikationsendgeräts (200, 555) bestimmt;
eine Positionsantwort erzeugt, welche die Position angibt, und die Positionsantwort an das erste mobile Kommunikationsendgerät (200, 550) sendet; und
eine Alarmabfrage vom ersten mobilen Kommunikationsendgerät (200, 550) empfängt und
als Antwort darauf einen Alarm an einen Notfallkontakt (580) ausgibt.

10. Verfahren zur Verwendung in einem mobilen Kommunikationsendgerät (200, 555), das einen Speicher (240) und eine Steuerung (210) umfasst, wobei das Verfahren während einer bestehenden Kommunikationssitzung mit einem ersten mobilen Kommunikationsendgerät (200, 550) umfasst:
Empfangen einer Positionsabfrage vom ersten mobilen Kommunikationsendgerät (200, 550);
Bestimmen einer Position des mobilen Kommunikationsendgeräts (200, 555);
Erzeugen einer Positionsantwort, welche die Position angibt, und Senden der Positionsantwort an das erste mobile Kommunikationsendgerät (200, 550); und
Empfangen einer Alarmabfrage vom ersten mobilen Kommunikationsendgerät (200, 550) und
Ausgeben eines Alarms an einen Notfallkontakt (580) als Antwort darauf.

11. Computerlesbares Speichermedium (40), das mit Anweisungen (41) codiert ist, die, wenn auf einen Prozessor geladen und darauf ausgeführt, die Durchführung des Verfahrens nach Anspruch 8 oder 10 veranlassen.

## Revendications

1. Terminal de communication mobile (200, 550) comprenant une mémoire (240), une interface utilisateur (120, 130, 135, 220) et un contrôleur (210), dans lequel ledit contrôleur (210) est configuré, au cours d'une session de communication en cours avec un second terminal de communication mobile (200, 555), de manière à:
recevoir une demande de position à travers ladite interface utilisateur (120, 130, 135, 220) ;
générer une demande de position et transmettre ladite demande de position audit second terminal de communication mobile (200, 555), ce qui permet par conséquent d'ordonner audit second terminal de communication mobile (200, 555) de fournir une position en cours dudit second terminal de communication mobile (200, 555) ;
recevoir une réponse de position à partir dudit second terminal de communication mobile (200, 555), ladite réponse de position indiquant une position ;
présenter ladite position à travers ladite interface utilisateur (120, 220), ce qui permet d'autoriser par conséquent l'émission d'alarmes pertinentes ; et
recevoir une demande d'alarme à travers ladite interface utilisateur (120, 130, 135, 220) ; et
générer une demande d'alarme et transmettre ladite demande d'alarme audit second terminal de communication mobile (200, 555), ce qui permet par conséquent d'ordonner audit second terminal de communication mobile (200, 555) d'émettre une alarme à destination d'un contact d'urgence (580).

2. Terminal de communication mobile (200, 550) selon la revendication 1, dans lequel le contrôleur (210) est en outre configuré de manière à inclure une authentification dans ladite demande de position.

3. Terminal de communication mobile (200, 550) selon l'une quelconque des revendications 1 à 2, dans lequel le contrôleur (210) est en outre configuré de manière à présenter ladite position sous la forme d'une voix hors champ à travers ladite interface utilisateur (220).

4. Terminal de communication mobile (200, 550) selon l'une quelconque des revendications 1 à 3, dans lequel le contrôleur (210) est en outre configuré de manière à présenter une invite pour une alarme à travers ladite interface utilisateur (120, 220) et dans lequel ladite demande d'alarme reçue à travers ladite interface utilisateur (120, 130 135, 220) est une réponse à ladite invite, ce qui permet par conséquent la confirmation d'une alarme avant l'émission de ladite alarme.

5. Terminal de communication mobile (200, 550) selon l'une quelconque des revendications 1 à 4, dans lequel ladite position indique un point d'accès sans fil prédéfini ou une référence à une adresse de rue, à un parc, à une place ou à un bâtiment.

6. Terminal de communication mobile (200, 550) selon l'une quelconque des revendications 1 à 5, dans lequel ladite demande de position, et/ou ladite demande d'alarme, lorsqu'elles dépendent des revendications 2 à 5, sont reçues à travers un écran tactile (120, 135).

7. Terminal de communication mobile (200, 550) selon l'une quelconque des revendications 1 à 6, dans lequel ladite demande de position, et/ou ladite demande d'alarme, lorsqu'elles dépendent des revendications 2 à 5, sont reçues sous la forme d'un code à travers au moins une touche numérique (130).

8. Procédé destiné à être utilisé dans un terminal de communication mobile (200, 550) comprenant une mémoire (240), une interface utilisateur (120, 130, 135, 220) et un contrôleur (210), ledit procédé consistant à, au cours d'une session de communication en cours avec un second terminal de communication mobile (200, 555) :
recevoir une demande de position à travers ladite interface utilisateur (120, 130, 135, 220) ;
générer une demande de position et transmettre ladite demande de position audit second terminal de communication mobile (200, 555), ce qui permet par conséquent d'ordonner audit second terminal de communication mobile (200, 555) de fournir une position en cours dudit second terminal de communication mobile (200, 555) ;
recevoir une réponse de position à partir dudit second terminal de communication mobile (200, 555), ladite réponse de position indiquant une position ;
présenter ladite position à travers ladite interface utilisateur (120, 220), ce qui permet d'autoriser par conséquent l'émission d'alarmes pertinentes ; et
recevoir une demande d'alarme à travers ladite interface utilisateur (120, 130, 135, 220) ; et
générer une demande d'alarme et transmettre ladite demande d'alarme audit second terminal de communication mobile (200, 555), ce qui permet par conséquent d'ordonner audit second terminal de communication mobile (200, 555) d'émettre une alarme à destination d'un contact d'urgence (580).

9. Terminal de communication mobile (200, 555) comprenant une mémoire (240) et un contrôleur (210), dans lequel ledit contrôleur (210) est configuré, au cours d'une session de communication en cours avec un premier terminal de communication mobile (200, 550), de manière à :
recevoir une demande de position à partir dudit premier terminal de communication mobile (200, 550) ;
déterminer une position dudit terminal de communication mobile (200, 555) ;
générer une réponse de position indiquant ladite position et transmettre ladite réponse de position audit premier terminal de communication mobile (200, 550) ; et
recevoir une demande d'alarme à partir dudit premier terminal de communication mobile (200, 550) ; et
en réponse à celle-ci, émettre une alarme à destination d'un contact d'urgence (580).

10. Procédé destiné à être utilisé dans un terminal de communication mobile (200, 555) comprenant une mémoire (240) et un contrôleur (210), ledit procédé consistant à, au cours d'une session de communication en cours avec un premier terminal de communication mobile (200, 550) :
recevoir une demande de position à partir dudit premier terminal de communication mobile (200, 550) ;
déterminer une position dudit terminal de communication mobile (200, 555) ;
générer une réponse de position indiquant ladite position et transmettre ladite réponse de position audit premier terminal de communication mobile (200, 550) ; et
recevoir une demande d'alarme à partir dudit premier terminal de communication mobile (200, 550) ; et
en réponse à celle-ci, émettre une alarme à destination d'un contact d'urgence (580).

11. Support de stockage lisible par ordinateur (40) codé avec des instructions (41) qui, lorsqu'elles sont chargées et exécutées sur un processeur, occasionnent la mise en oeuvre du procédé selon la revendication 8 ou 10.
